Europäisches Patentamt

(19) European Patent Office

Office européen des brevets

(11) Numéro de publication : **0 430 743 A1**

# (12) DEMANDE DE BREVET EUROPEEN

(21) Numéro de dépôt : **90403201.8**

(22) Date de dépôt : **12.11.90**

(51) Int. Cl.⁵ : **B60C 17/04**

(30) Priorité : 29.11.89 FR 8915700

(43) Date de publication de la demande :
05.06.91 Bulletin 91/23

(84) Etats contractants désignés :
BE DE ES GB IT LU NL SE

(71) Demandeur : HUTCHINSON S.A. une Société
Anonyme dotée d'un Conseil de Surveillance
et d'un Directoire
2, rue Balzac
F-75008 Paris (FR)

(72) Inventeur : Carpentier, Eric
3, Place de l'Europe
F-95660 Champagne sur Oise (FR)
Inventeur : Pelletier, Bruno
13, Avenue des Acacias
F-60340 Villeurs s/Saint Leu (FR)
Inventeur : Boni, Bernard
26, rue des Martyrs
F-95660 Champagne sur Oise (FR)

(74) Mandataire : Orès, Bernard et al
Cabinet ORES 6, Avenue de Messine
F-75008 Paris (FR)

(54) **Dispositif d'anneau pour roulage à plat.**

(57) Dispositif d'anneau pour roulage à plat à secteurs articulés pour roue de véhicule munie d'un pneumatique sans chambre à air monté sur une jante monobloc à puits ou creux de jante, logé à l'intérieur dudit pneumatique et épousant au moins en partie la forme de la jante, la surface externe dudit anneau étant distante de la surface interne de la bande de roulement du pneumatique aussi longtemps que celui-ci est dans sa condition normale de fonctionnement.

L'anneau (10) en matériau composite à base d'une résine thermoplastique armée est conformé pour présenter dans sa partie destinée à venir au contact du creux de jante (22) une lèvre de butée pour le maintien d'un talon $(T_2)$ du pneumatique dont l'autre talon $(T_1)$ est soumis à l'action d'une cale en élastomère prévue sur la face diamétrale de l'anneau (10) opposée à celle portant la lèvre de butée, les secteurs articulés étant assemblés à l'aide de fixations mécaniques (35).

FIG. 3

EP 0 430 743 A1

## DISPOSITIF D'ANNEAU POUR ROULAGE A PLAT

L'invention a pour objet un dispositif d'anneau pour roulage à plat.

On connaît déjà diverses réalisations de dispositifs de roulage à plat, c'est-à-dire de dispositifs qui, placés à l'intérieur d'un pneumatique sans chambre à air monté sur une jante, permettent aux véhicules dont ils équipent les roues de continuer à rouler de manière satisfaisante en cas de diminution partielle ou totale de la pression de gonflage. De tels dispositifs trouvent application pour des roues de véhicules amenés à évoluer dans des zones de circulation difficile ou dangereuse et pour lesquels une certaine mobilité doit être conservée en toutes circonstances, que la diminution de gonflage soit due à une crevaison accidentelle ou provoquée.

Les conditions que doivent remplir de tels dispositifs sont à la fois sévères et contradictoires. Il importe, en effet, lors d'une crevaison ou même d'une chute partielle de la pression de gonflage d'un pneumatique :

- d'empêcher les talons du pneumatique de se séparer de leur siège sur la jante, que celle-ci soit du type plate, démontable ou non démontable ou encore à puits ou creux de jante (drop center) ;
- d'éviter que la bande de roulement qui vient au contact du dispositif ne soit trop rapidement endommagée par poinçonnement ;
- de conserver aux roues des caractéristiques d'amortissement aussi bonnes que possible, tout en évitant un échauffement qui a tendance à se produire lorsque le dispositif comprend, ou est à base de matériaux élastomères souples.

A ces conditions, que l'on peut qualifier de mécaniques et qui sont liées par principe même au roulage à plat, s'ajoute également la nécessité pour le dispositif d'être facile à monter et à démonter, sans outillage spécialisé, en particulier pour des dispositifs destinés à équiper des jantes en une seule pièce, non démontables, à puits ou creux de jante.

Parmi les réalisations proposées pour satisfaire aux conditions rappelées ci-dessus, on peut citer celles dans lesquelles l'anneau permettant le roulage à plat est constitué par l'assemblage de pièces arquées munies à chacune de leurs extrémités de moyens d'accouplement, comme décrit par exemple dans FR-A-2 160 265 ou FR-A-2 610 249 ou celles décrites dans FR-A-2 383 031 où l'anneau de roulage à plat est un élément annulaire d'une seule pièce fendu en un point de sa circonférence pour présenter des portions d'extrémités déplaçables l'une par rapport à l'autre. Dans le premier de ces documents, les moyens d'accouplement sont du type mâle/femelle complétés par des boulons assurant une action de serrage circonférenciel lorsqu'ils sont actionnés, tandis que dans le troisième des documents mentionnés les moyens d'accouplement sont du type à profils s'interpénétrant avec des moyens de goujons et/ou de cliquets. Un dispositif selon le premier ou le troisième des documents cités est prévu pour équiper des véhicules se déplaçant à des vitesses de l'ordre de 110 à 130 km/h.

Si l'on souhaite équiper d'anneaux pour roulage à plat les roues de véhicules se déplaçant à des vitesses plus importantes que celles rapportées ci-dessus, par exemple jusqu'à 200-250 km/h, alors le problème reste posé de fournir un dispositif satisfaisant à l'ensemble des conditions énoncées ci-avant.

C'est, par conséquent, un but général de l'invention de fournir un dispositif du type anneau pour roulage à plat propre à équiper une roue de véhicule susceptible de se déplacer à vitesse élevée et munie d'un pneumatique sans chambre à air monté sur la jante de roue lequel permette de limiter l'affaissement du pneumatique en cas de crevaison, de sorte que peut être évitée une détérioration rapide des flancs du pneumatique et qui autorise le déplacement du véhicule sur plusieurs dizaines de kilomètres tout en gardant le pneu sur la roue.

C'est, aussi, un but de l'invention de fournir un tel dispositif qui soit propre à supporter dans les meilleures conditions lors du roulage à plat la charge du véhicule, sans cisailler la bande de roulement du pneumatique en lui appliquant une pression trop importante et sans qu'il apparaisse un endommagement prématuré par échauffement interne.

C'est, encore, un but de l'invention de fournir un tel dispositif qui soit suffisamment souple pour ne pas engendrer des vibrations mécaniques importantes, lors du roulage à plat, garantissant ainsi une conduite du véhicule dans de bonnes conditions de sécurité, nonobstant la crevaison du pneumatique équipé du dispositif.

C'est, enfin, un but de l'invention de fournir un tel dispositif propre à équiper des roues de véhicules civils ou militaires susceptibles de faire l'objet d'attaques par balles, c'est-à-dire un dispositif qui soit aussi peu sensible que possible à l'impact desdites balles.

Le problème est résolu, selon l'invention, dans un dispositif d'anneau de roulage à plat à secteurs articulés pour roue de véhicule munie d'un pneumatique sans chambre à air monté sur une jante monobloc à puits ou creux de jante, logé à l'intérieur dudit pneumatique et épousant au moins en partie la forme de la jante, la surface externe dudit anneau étant distante de la surface interne de la bande de roulement du pneumatique aussi longtemps que celui-ci est dans sa condition normale de fonctionnement, par le fait que ledit anneau est en un matériau composite à base d'une résine thermoplastique armée et est conformé pour présenter dans sa partie destinée à venir au contact de la jante une lèvre de butée pour le maintien d'un talon du pneumatique dont l'autre est soumis à l'action d'une cale en élastomère prévue sur la face diamétrale de l'anneau opposée à celle portant la lèvre de butée, les secteurs articulés étant assemblés à l'aide de fixations mécaniques destinées à assurer la mise en place de l'ensemble de l'anneau et de ses parties constitutives (cale en élastomère et lèvre de butée) lors de leur actionnement.

Selon une autre caractéristique de l'invention, la résine thermoplastique constitutive du matériau composite formant l'anneau est choisie dans la famille des polyamides séquencés pour RIM et elle est armée de renfort en fibres de verre, procurant ainsi un matériau ayant de très bonnes caractéristiques mécaniques de résistance en traction et en compression, une très bonne tenue en fatigue, à l'échauffement, aux chocs et de résistance à l'impact des balles.

La présence des fibres de verre en tant que renforts du matériau composite permet d'obtenir pour ce dernier un coefficient de dilatation notablement réduit par rapport à celui de la résine thermoplastique seule, d'une part, tandis que l'accroissement des caractéristiques de résistance mécanique permet, d'autre part, de réduire les sections droites de la lèvre de butée et des parties qui lui sont adjacentes, avec pour conséquence une plus grande facilité de montage du dispositif et du pneumatique sur la jante.

Une telle augmentation des caractéristiques de résistance mécanique permet en outre de renforcer les zones d'assemblage des secteurs constitutifs de l'anneau.

La cale en élastomère prévue pour exercer un effort de compression sur un des talons du pneumatique doit également pouvoir absorber les tolérances de largeur intérieure de la roue et d'épaisseur desdits talons et, selon une autre caractéristique de l'invention, l'élastomère constitutif de ladite cale est avantageusement choisi dans la famille des caoutchoucs très souples à bonne caractéristique de dureté rémanente à la compression, la souplesse du caoutchouc étant mise à profit pour que l'effort induit par la compression de la cale soit autant que faire se peut indépendant de la largeur de la roue qui, de construction même, a des tolérances de largeur intérieure de l'ordre de ± 3 mm pour des diamètres de 14, 15 et 16 pouces et de ± 5 mm pour des diamètres de 20 pouces.

Dans une forme de réalisation particulièrement avantageuse de l'invention, la lèvre de butée intégrée, venue d'une pièce avec chacun des secteurs de l'anneau, a une section droite quelque peu en ⌐ avec une base reliée au corps de l'anneau proprement dit et une aile destinée à venir au contact d'un talon du pneumatique pour empêcher ce dernier de se déplacer latéralement sur la jante lors du roulage à plat, améliorant de la sorte la motricité du véhicule dans cette configuration avec une bonne tenue de route, tout en permettant le démontage de l'enveloppe de pneumatique sans dégradation de ladite butée.

Pour que l'assemblage des secteurs de l'anneau ne soit que peu ou pas déformé, y compris à des vitesses de déplacement élevées du véhicule, de l'ordre de 220 km/h, et que par conséquent puisse être garanti un fonctionnement satisfaisant du dispositif à ces vitesses, l'invention prévoit de réaliser les fixations mécaniques des secteurs, en particulier les vis, en un matériau à forte résistance en traction, avantageusement un acier inoxydable de 100 daN/mm de résistance en traction, d'une part, et d'accroître la charge de renforts en fibres de verre ou analogues du matériau composite constitutif des secteurs de l'anneau dans les zones d'assemblage, d'autre part, pour augmenter localement les caractéristiques mécaniques en traction, en cisaillement et en flexion dudit matériau composite.

Selon une autre caractéristique de l'invention, on prévoit d'associer auxdites fixations mécaniques une ou plusieurs rondelles excentrées dont le rôle est de permettre d'absorber les tolérances dimensionnelles du creux ou puits de jante sur lequel est monté le dispositif.

La présence d'une ou de rondelle(s) excentrée(s) permet en outre, lors de l'actionnement des fixations mécaniques, de serrer les secteurs constitutifs de l'anneau sur la jante, empêchant ainsi le dévirage du dispositif et l'apparition d'un éventuel balourd défavorable au bon fonctionnement.

Pour provoquer le déplacement de la ou des rondelle(s) excentrée(s), l'invention prévoit, le plus simplement, d'associer à chaque vis d'assemblage des extrémités de secteurs entre eux un cône de serrage propre à coopérer avec une portée de même conicité de la ou des rondelle(s) excentrée(s) fixée(s) par des vis Parker sur une face diamétrale de chaque secteur de l'anneau.

L'invention sera bien comprise par la description qui suit, faite à titre d'exemple et en référence au dessin annexé dans lequel :

- la figure 1 est une vue en élévation d'un dispositif d'anneau pour roulage à plat selon l'invention ;
- la figure 2 est une vue très schématique en coupe selon la ligne 2-2 de la figure 1 ;
- la figure 3 est une vue en coupe radiale d'une partie de roue équipée d'un dispositif selon l'invention ;

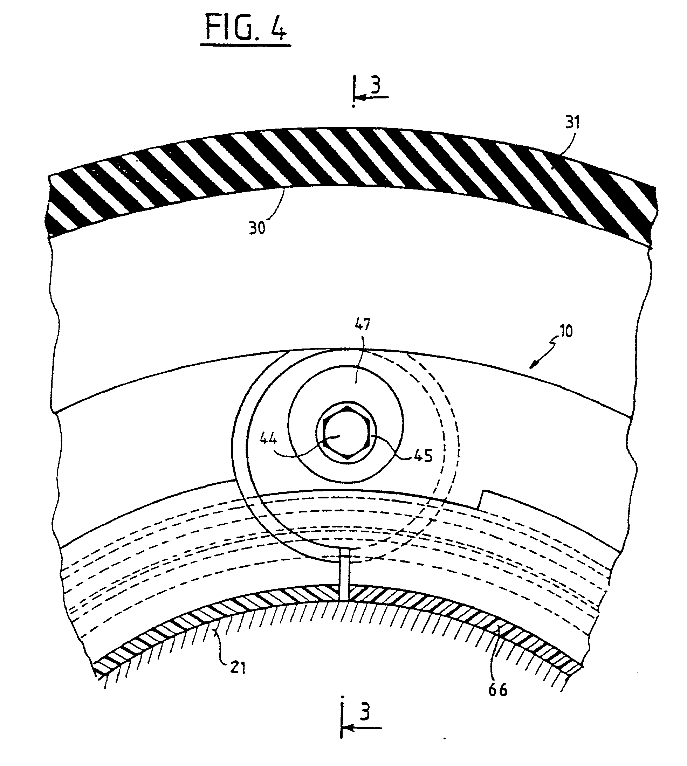

- la figure 4 est une vue partielle en coupe selon la ligne brisée 4-4 de la figure 3 ;
- la figure 5 est une vue analogue à celle de la figure 2, mais à plus grande échelle d'une partie de dispositif selon l'invention ;
- la figure 6 est une vue analogue à celle de la figure 5, mais pour une variante de réalisation ;
- la figure 7 est une vue semblable à celle de la figure 3 illustrant la mise en oeuvre d'un dispositif selon l'invention.

Un dispositif d'anneau pour roulage à plat selon l'invention, 10, comprend essentiellement, —dans la forme de réalisation décrite et représentée—, trois secteurs 11, 12, 13 en arc de cercle articulés à leurs extrémités respectives autour d'axes 14, 15, 16 et qui sont réalisés en un matériau composite à base de résine thermoplastique armée, comme il sera précisé ci-après. Le dispositif est prévu pour être logé à l'intérieur d'un pneumatique 20, sans chambre à air, monté sur une jante de roue 21 du type monobloc, c'est-à-dire comportant un puits ou creux de jante 22 adjacent à une première partie cylindrique 23 se prolongeant vers l'intérieur I de la roue par une partie tronconique 24 en regard de laquelle, sur la partie extérieure E de la roue, est prévue une seconde partie tronconique 25 directement adjacente au puits de jante 22. Les parties tronconiques 24 et 25 sont bordées, vers l'extérieur de la jante, par des épaulements 26 et 27, respectivement, qui servent d'appui aux talons $T_1$ et $T_2$ du pneumatique 20.

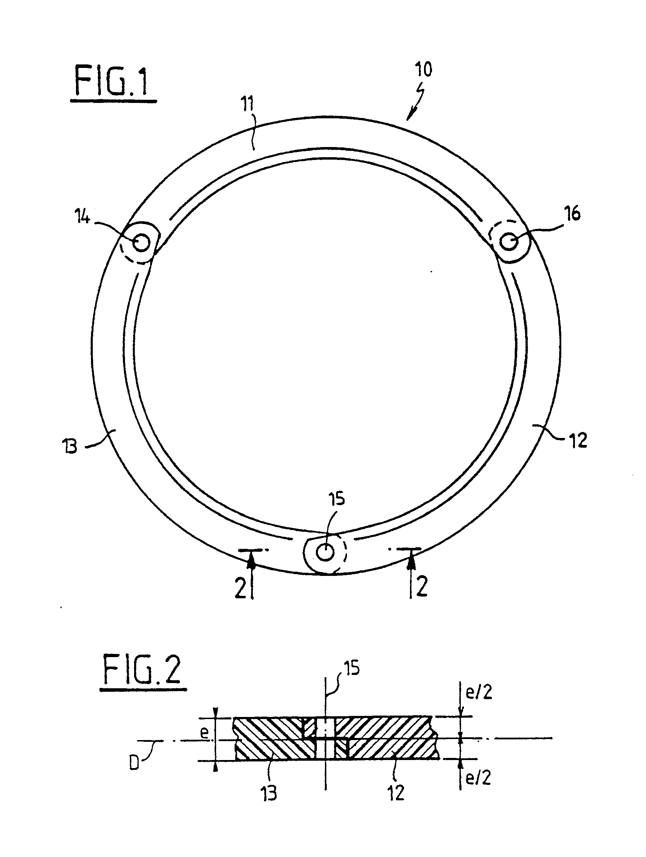

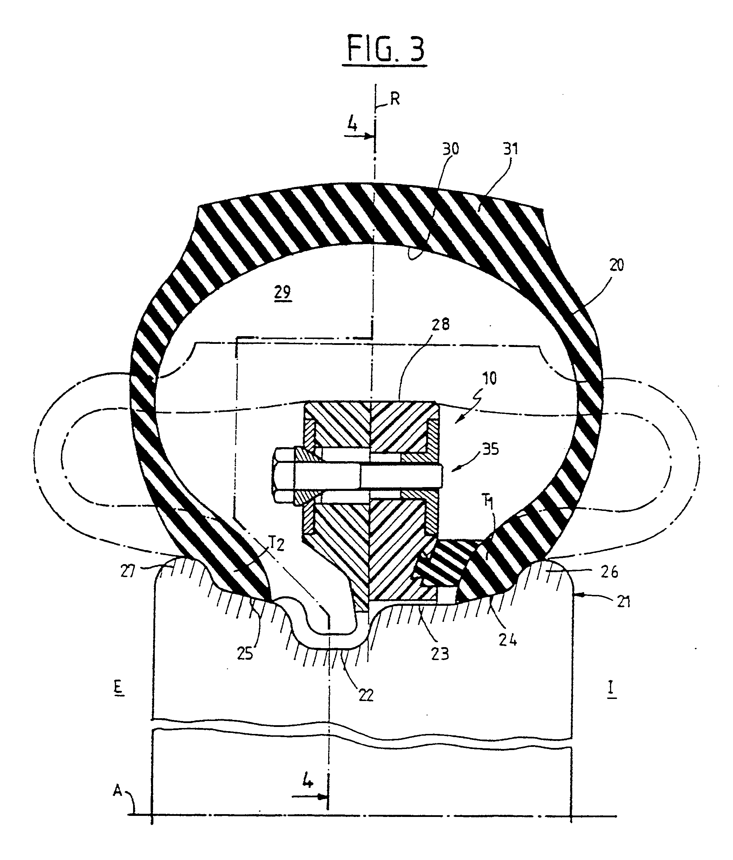

Comme bien montré sur la figure 3, chacun des secteurs 11, 12, 13 constitutif du dispositif 10 est destiné à servir, par sa surface de plus grand diamètre 28, de support à la surface interne 30 de la bande de roulement 31 du pneumatique en cas de crevaison, c'est-à-dire pour la condition montrée en traits mixtes sur cette figure et le diamètre externe de cette surface 28 est, pour cette raison, sensiblement égal au diamètre moyen de la chambre toroïdale 29 comprise entre la jante 21 et le plus grand diamètre du pneumatique. Chaque secteur 11, 12 et 13 est à section droite constante sur la quasi-totalité de son envergure angulaire à l'exception de ses extrémités où, comme bien visible sur les figures 2 et 3, l'épaisseur de chaque secteur de l'anneau est de l'ordre de e/2 si l'on désigne par e l'épaisseur du corps de l'anneau dans sa partie opératoire, c'est-à-dire la dimension de sa surface 28 mesurée parallèlement à l'axe A de la roue.

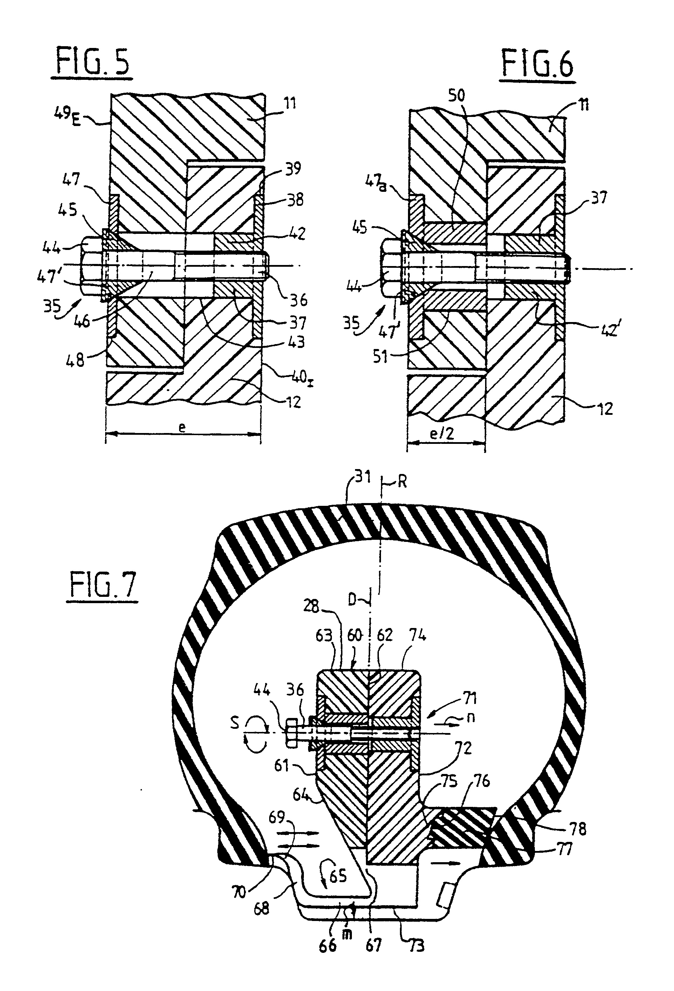

L'articulation et l'assemblage entre eux des trois secteurs 11, 12, 13 ayant chacun une envergure angulaire d'environ 120° (ou en variante de deux secteurs ayant une envergure angulaire de 180° chacun) sont réalisés à l'aide de moyens de fixation mécanique mieux montrés sur les figures 5 et 6. Lesdits moyens, 35, prévus pour garantir la sécurité de l'assemblage y compris à des vitesses de déplacement du véhicule de l'ordre de 220 km/h, et par conséquent à vitesse de rotation élevée correspondant à une importante composante de force centrifuge, comprennent une vis 36 en un acier inoxydable à forte résistance à la traction (de l'ordre de 100 daN/mm) et dont la flexion est ainsi limitée. La vis 36 est propre à coopérer avec un écrou 37 dont la tête plate 38 est logée dans un lamage 39 de la face diamétrale intérieure $40_I$ du secteur 12 (par exemple) où elle est fixée par des vis Parker, non représentées, tandis que le corps 42 de l'écrou 37 est logé dans un forage 43 de la partie d'épaisseur e/2 dudit secteur, ladite partie présentant au voisinage dudit forage une densité de renforts, par exemple des fibres de verre, plus grande que dans le reste du secteur pour augmenter localement les caractéristiques mécaniques en traction, en cisaillement et en flexion du dispositif.

Sur la partie lisse 46 de la vis 36 propre à être manoeuvrée par sa tête à pans 44 est enfilé un cône de serrage 45 prévu pour coopérer avec une portée de même conicité 47' d'une rondelle excentrée 47 logée dans un lamage 48 de la face diamétrale extérieure $49_E$ du secteur assemblé avec le secteur 12, par exemple ici le secteur 11.

Dans la variante montrée sur la figure 6, la structure localement renforcée en fibres de verre du matériau composite formant les secteurs 11 et 12 est analogue à celle qui vient d'être décrite ci-dessus et il en est de même de l'organisation générale des fixations mécaniques, sous réserve de ce que le cône de serrage 45 coopère avec une portée conique 47' ménagée sur une rondelle excentrée $47_a$, plus épaisse que la rondelle 47 et d'une pièce avec une chemise ou douille 50 logée dans un forage traversant 51 de la partie de plus faible épaisseur, e/2, du secteur 11. Dans cette réalisation, également, la hauteur totale de l'écrou 42' est plus importante que celle de l'écrou de la réalisation selon la figure 5.

Comme bien visible sur les figures 3 et 7, la section droite des secteurs 11, 12, 13 constitutifs du dispositif d'anneau 10 est dissymétrique par rapport à un plan diamétral moyen de trace D confondu avec le plan diamétral R de la roue lorsque l'anneau est monté sur la jante. Dans la partie d'espace correspondant à la zone extérieure E de la roue chaque secteur est conformé, à l'exception de ses extrémités décrites ci-dessus, suivant un boudin 60 à section droite approximativement en trapèze rectangle et ainsi limitée, —dans le plan des figures 3 et 7—, par deux bords sensiblement parallèles 61 et 62, —ce dernier formant en quelque sorte la base de grande dimension du trapèze—, et deux bords 63 et 64, le premier définissant la surface externe 28 du boudin 60 et le second étant incliné sur le bord 62 d'un angle d'environ 45°. A ce boudin 60 est adjacente une partie 65, elle aussi de révolution autour d'un axe confondu avec l'axe A de la roue lorsque le dispositif d'anneau est en place, et dont la section droite quelque peu en forme de ∿ présente une base 66 raccordée à un sommet 67 du trapèze précédemment décrit et une aile 68 dont l'extrémité distante de la base 66 est conformée suivant une lèvre 69 effilée au voisinage de son bord libre 70.

Comme illustré sur la figure 7, —qui montre le dispositif en cours de montage, c'est-à-dire avant qu'il n'ait pris sa position définitive par rapport à la jante 21—, la section droite de la partie 65 est conjuguée de celle du creux de jante 22 et des parties qui lui sont directement adjacentes, pour former une butée destinée à maintenir le talon $T_2$ extérieur du pneumatique et l'empêcher de se déplacer latéralement sur la jante lors du roulage à plat, afin d'améliorer la motricité dans cette configuration et d'assurer une bonne tenue de route, tout en permettant le démontage de l'enveloppe de pneumatique sans détériorer ladite butée.

Dans la partie d'espace intérieur I, limitée par le plan diamétral moyen de trace D, la section droite du boudin toroïdal 60 est sensiblement rectangulaire, limitée dans le plan des figures 3 et 7 par deux bords parallèles 62 et 72 et deux bords également parallèles mais perpendiculaires aux premiers référencés 73 et 74, le premier dans le prolongement du bord externe de la base 66 de la butée 65 et le second dans le prolongement du bord 63 définissant la surface externe 28 des secteurs constitutifs de l'anneau 10. Sur la face diamétrale 71 que définit le bord 72 du boudin 60, et plus près du bord 73 que du bord 74, ladite face 71 est conformée suivant une nervure 75 dont la face libre en queue d'aronde, 76, reçoit la face de forme conjuguée d'une cale annulaire 77 dont la face 78, —opposée à la face 76—, est à légère conicité par rapport à l'axe A de la roue avec des dimensions, en particulier une largeur mesurée parallèlement à l'axe A de la roue, qui est légèrement supérieure à l'espace qui lui est offert pour se loger, lorsque l'anneau est en place, entre la face 71 et la face interne du talon $T_1$ du pneumatique 20.

Conformément à l'invention, et comme indiqué ci-dessus, les secteurs 11, 12, 13 sont réalisés en un matériau composite à base d'une résine thermoplastique armée, avantageusement par des renforts en fibres de verre. Des résultats particulièrement avantageux ont été obtenus en choisissant la résine thermoplastique dans la famille des polyamides séquencés pour RIM, un exemple non limitatif d'un matériau approprié étant celui connu sous le nom commercial de Nyrim (une Marque Déposée de la Société DSM France). L'utilisation d'un tel matériau permet d'obtenir pour l'anneau 10 de très bonnes caractéristiques de résistance mécanique, en traction et en compression, une très bonne tenue en fatigue et aux effets thermiques, de même qu'une excellente tenue aux chocs et aux impacts éventuels de balles. La présence des fibres de verre permet d'obtenir un coefficient de dilatation du matériau, qui est proche de celui de l'aluminium. En outre, le fait pour l'invention de modifier localement la concentration de renforts en fibres de verre, soit dans les zones d'extrémité des secteurs pour l'assemblage desdits secteurs entre eux, soit dans la partie intégrée 65 formant la butée du dispositif d'anneau, permet d'accroître localement la résistance mécanique en traction, flexion et/ou cisaillement au voisinage des zones de fixation et également le module et la résistance en flexion de la butée, caractéristiques qui permettent le démontage de l'enveloppe de pneumatique 20 sans endommager ladite butée.

La mise en oeuvre d'un dispositif selon l'invention résulte immédiatement de ce qui précède : après avoir mis en place le talon $T_1$ sur la jante, au contact de l'épaulement 26, on introduit dans l'enveloppe de pneumatique le dispositif d'anneau 10 dont deux secteurs sont reliés entre eux de façon "lâche" la condition étant alors celle montrée sur la figure 7. Lorsque, à partir de cette condition, on procède au serrage des vis 36 par manoeuvre des têtes à pans 44, comme illustré schématiquement par la flèche circulaire S, le dispositif d'anneau se déplace à la fois dans la direction le rapprochant de la jante 21, comme montré par la flèche m, et dans la direction montrée par les flèches n, qui tend à amener le plan diamétral moyen D de l'anneau dans le plan diamétral moyen R de la jante et de la roue. Au cours de ce déplacement, provoqué par la coopération du cône de serrage 45 avec les rondelles excentrées 47 ou 47a des fixations mécaniques, l'anneau 10 est appliqué à serrage sur la jante, d'une part, la butée 65 se met en place, d'autre part, tandis que la cale annulaire 77 dont le matériau est choisi dans une famille d'élastomères caoutchoutiques très souples à bonne dureté rémanente à la compression est comprimé contre le talon $T_1$ du pneumatique, jusqu'à prendre la forme et position montrées sur la figure 3. L'effort de compression alors exercé par la cale garantit que la motricité du véhicule n'est pas perdue, lors d'une crevaison, c'est-à-dire en cas de roulage à plat, étant donné que le talon $T_1$ est fermement maintenu contre l'épaulement de la jante de même que, après mise en place de la partie 65, le talon $T_2$ est maintenu par la lèvre 69.

Le choix pour la cale annulaire 77 d'un matériau tel que défini ci-dessus permet en outre de tenir compte des tolérances de fabrication des jantes de roue, tolérances qui peuvent être de l'ordre de ± 3 mm pour une dimension intérieure de jante d'un diamètre de 14, 15 ou 16 pouces et même plus importantes, de l'ordre de ± 5 mm pour un diamètre de 20 pouces. A la prise en compte de ces tolérances contribue également le fait que les fixations mécaniques sont assurées par des rondelles excentrées permettant l'emploi d'un même dispositif pour des roues dont la cote nominale varie dans les limites indiquées ci-dessus.

Après fixation de l'anneau 10 sur la jante 21 par les moyens indiqués ci-dessus, fixation qui empêche un dévissage du dispositif et par conséquent l'apparition d'un balourd défavorable, l'autre talon du pneumatique, $T_2$, est mis en place puis la pression de gonflage est appliquée et la roue montée sur le véhicule qu'elle est destinée à équiper.

Des essais effectués sur un véhicule dont les roues étaient équipées de dispositifs tels que décrits ci-dessus ont permis de conserver une mobilité satisfaisante au véhicule après crevaison provoquée des pneumatiques du véhicule roulant à une vitesse de l'ordre de 200/220 km/h.

## Revendications

1. Dispositif d'anneau pour roulage à plat à secteurs articulés pour roue de véhicule munie d'un pneumatique sans chambre à air monté sur une jante monobloc à puits ou creux de jante, logé à l'intérieur dudit pneumatique et épousant au moins en partie la forme de la jante, la surface externe dudit anneau étant distante de la surface interne de la bande de roulement du pneumatique aussi longtemps que celui-ci est dans sa condition normale de fonctionnement, caractérisé en ce que ledit anneau (10) en matériau composite à base d'une résine thermoplastique armée est conformé pour présenter dans sa partie destinée à venir au contact du creux de jante (22) une lèvre de butée (65, 68, 69) pour le maintien d'un talon ($T_2$) du pneumatique dont l'autre talon ($T_1$) est soumis à l'action d'une cale en élastomère (77) prévue sur la face diamétrale (72) de l'anneau (10) opposée à celle portant la lèvre de butée, les secteurs articulés (11, 12, 13) étant assemblés à l'aide de fixations mécaniques (35) destinées à assurer la mise en place de l'ensemble de l'anneau et de ses parties constitutives (cale en élastomère et lèvre de butée) lors de leur actionnement.

2. Dispositif selon la revendication 1, caractérisé en ce que les secteurs (11, 12, 13) sont en un matériau composite dont la résine thermoplastique est choisie dans la famille des polyamides séquencés pour RIM et est armée de renforts en fibres de verre, procurant ainsi un matériau ayant de très bonnes caractéristiques mécaniques de résistance en traction et en compression, une très bonne tenue en fatigue, à l'échauffement, aux chocs et de résistance à l'impact des balles.

3. Dispositif selon la revendication 1 ou la revendication 2, caractérisé en ce que la cale en élastomère (77) prévue pour exercer un effort de compression sur un des talons ($T_1$) du pneumatique (20) est en un matériau choisi dans la famille des caoutchoucs très souples à bonne caractéristique de dureté rémanente à la compression.

4. Dispositif selon l'une quelconque des revendications précédentes, caractérisé en ce que la lèvre de butée intégrée, (65, 68, 69) venue d'une pièce avec chacun des secteurs (11, 12, 13) de l'anneau (10) a une section droite quelque peu en ⌐_ avec une base (66) reliée au corps de l'anneau proprement dit et une aile (68, 69) destinée à venir au contact d'un talon ($T_2$) du pneumatique pour empêcher ce dernier de se déplacer latéralement sur la jante lors du roulage à plat.

5. Dispositif selon l'une quelconque des revendications précédentes, caractérisé en ce que les vis (36) des fixations mécaniques (35) des secteurs, (11, 12, 13) sont en un matériau à forte résistance à la traction, avantageusement un acier inoxydable de 100 daN/mm de résistance en traction, d'une part, et en ce que la densité des renforts en fibres de verre ou analogues du matériau composite constitutif des secteurs de l'anneau est augmenté localement pour accroître les caractéristiques mécaniques en traction, en cisaillement et en flexion dudit matériau composite.

6. Dispositif selon l'une quelconque des revendications précédentes, caractérisé en ce que lesdites fixations mécaniques comprennent une ou plusieurs rondelle(s) excentrée(s) (47, 47a) avec laquelle (lesquelles) coopère un cône de serrage (45) enfilé sur la vis (46).

FIG.1

FIG.2

# FIG. 3

# FIG. 4

FIG.5

FIG.6

FIG.7

Office européen
des brevets

**RAPPORT DE RECHERCHE EUROPEENNE**

Numero de la demande

EP    90 40 3201

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2610249 (HUTCHINSON)<br>* abrégé; figures * <br>--- | 1, 5 | B60C17/04 |
| A | US-A-3942571 (L.S. KRAFT)<br>* le document en entier * <br>--- | 1, 5 | |
| A | US-A-3653421 (T.W. JOHNSON)<br>* le document en entier * <br>----- | 3 | |

|  |  |  | **DOMAINES TECHNIQUES RECHERCHES (Int. Cl.5 )** |
|---|---|---|---|
|  |  |  | B60C |

Le présent rapport a été établi pour toutes les revendications

| Lieu de la recherche | Date d'achèvement de la recherche | Examinateur |
|---|---|---|
| LA HAYE | 21 FEVRIER 1991 | REEDIJK A.M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)